Europäisches Patentamt

European Patent Office

Office européen des brevets

(19)

(11) Numéro de publication: **0 079 087**
**A1**

## (12) DEMANDE DE BREVET EUROPEEN

(21) Numéro de dépôt: **82201000.5**

(22) Date de dépôt: **11.08.82**

(51) Int. Cl.³: **G 05 D 23/19**
G 05 D 23/20, G 05 B 15/02

(30) Priorité: **09.11.81 CH 7150/82**

(43) Date de publication de la demande:
**18.05.83 Bulletin 83/20**

(84) Etats contractants désignés:
**BE DE FR GB NL**

(71) Demandeur: **ANSTALT FAMURANO**
**Schwefelstrasse 29**
**FL-9490 Vaduz(LI)**

(84) Etats contractants désignés:
**BE DE FR GB NL**

(71) Demandeur: **PROMOTHERMO**
**VERWARMINGSTOEPASSING B.V.**
**P.C. Hoofstraat 5**
**Amsterdam(NL)**

(84) Etats contractants désignés:
**FR**

(72) Inventeur:
**L'inventeur a renonce a sa designation**

(74) Mandataire: **Ardin, Pierre et al,**
**PIERRE ARDIN & CIE 22, rue du Mont-Blanc**
**CH-1211 Genève 1(CH)**

(54) **Dispositif de programmation du chauffage des locaux.**

(57) Les éléments constituant le dispositif sont : un interrupteur (4) qui permet la mise sous et hors tension, un thermostat électronique (5) de l'appareil de chauffage, un organe de mesure de la température ambiante (6), un organe de réglage de la température de consigne (7), un émetteur de chaleur (8), un interface (9) qui permet le dialogue entre le thermostat (5) et l'organe de programmation (3) muni d'un connecteur (10) qui s'accouple à l'appareil de chauffage grâce à la partie complémentaire (11).

FIG.1

EP 0 079 087 A1

- 1 -

Dispositif de programmation du chauffage des locaux

La présente invention a pour objet un dispositif de programmation du chauffage des locaux selon un mode de chauffage normal, un mode de chauffage réduit et un mode de chauffage hors gel.

De tels dispositifs sont déjà connus. Une première catégorie est constituée par les centrales de programmation qui commandent les appareils de chauffage, soit directement en les mettant sous et hors tension, soit en envoyant des ordres de commande sur un fil pilote, soit encore en envoyant sur le réseau électrique des signaux codés reçus et décodés par les appareils de chauffage.

Ces centrales ont comme inconvénient de nécessiter une installation électrique spéciale. Dans le premier cas, si l'on veut pouvoir commander chaque appareil de chauffage, il faut qu'ils soient reliés individuellement à la centrale. De plus, ces centrales nécessitent des thermostats d'ambiance distincts de ceux équipant les appareils de chauffage.

Dans le deuxième cas, il faut utiliser un fil pilote supplémentaire, ce qui est très difficilement réalisable dans les installations existantes.

Dans le troisième cas, il faut éviter toute interférence avec des installations et appareils voisins par l'adjonction de filtres.

Une deuxième catégorie est constituée par les appareils de chauffage munis d'horloges programmables individuelles. Pour des raisons économiques évidentes, les possibilités de programmation de ces appareils sont limitées. Par contre, ils sont, en ce qui concerne leur programmation, réellement non dépendants de l'installation électrique.

Le dispositif objet de l'invention permet de réaliser un chauffage électrique programmable connecté à une installation électrique traditionnelle, tout en conservant des possibilités étendues de programmation et dans des conditions économiques avantageuses. Il est caractérisé en ce qu'il comprend des appareils de chauffage équipés de thermostats programmables individuellement, munis d'un interface et un organe mobile de programmation.

L'invention sera mieux comprise à la lecture de la description qui suit, donnée à titre d'exemple non limitatif et qui se réfère aux dessins dans lesquels :

- la figure 1 représente le bloc diagramme du dispositif

- la figure 2 représente l'organe de programmation

- la figure 3 est une vue en plan de l'interface organe de programmation/thermostat

- la figure 4 est une vue de côté de ce même interface

- la figure 5 représente le schéma électrique de l'interface

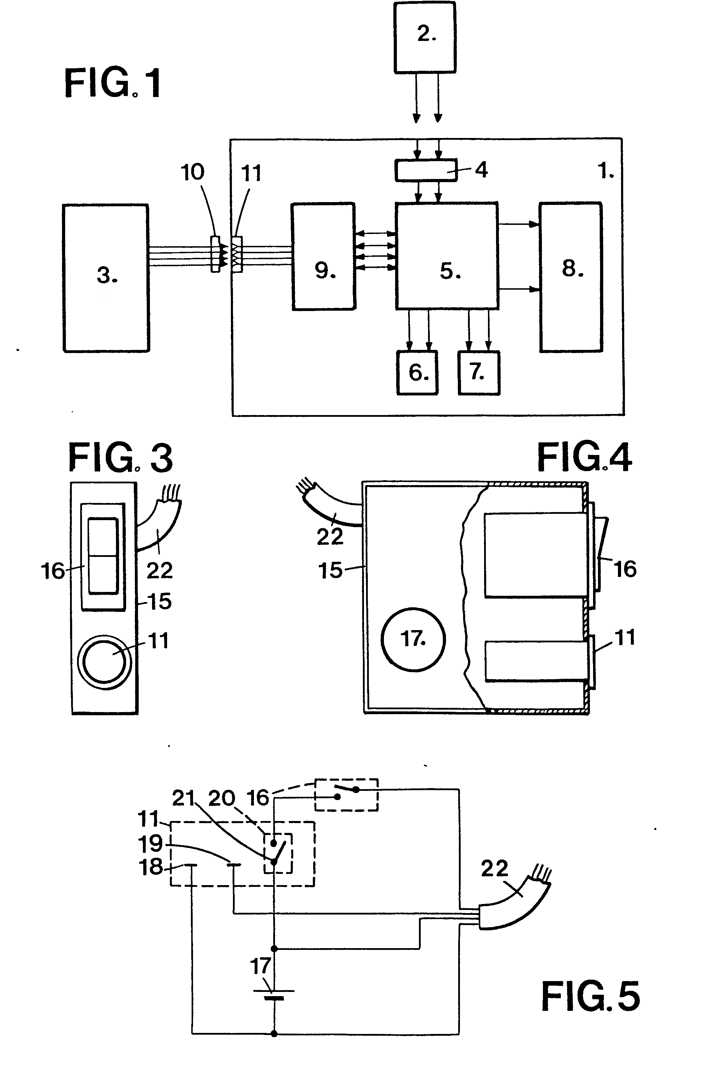

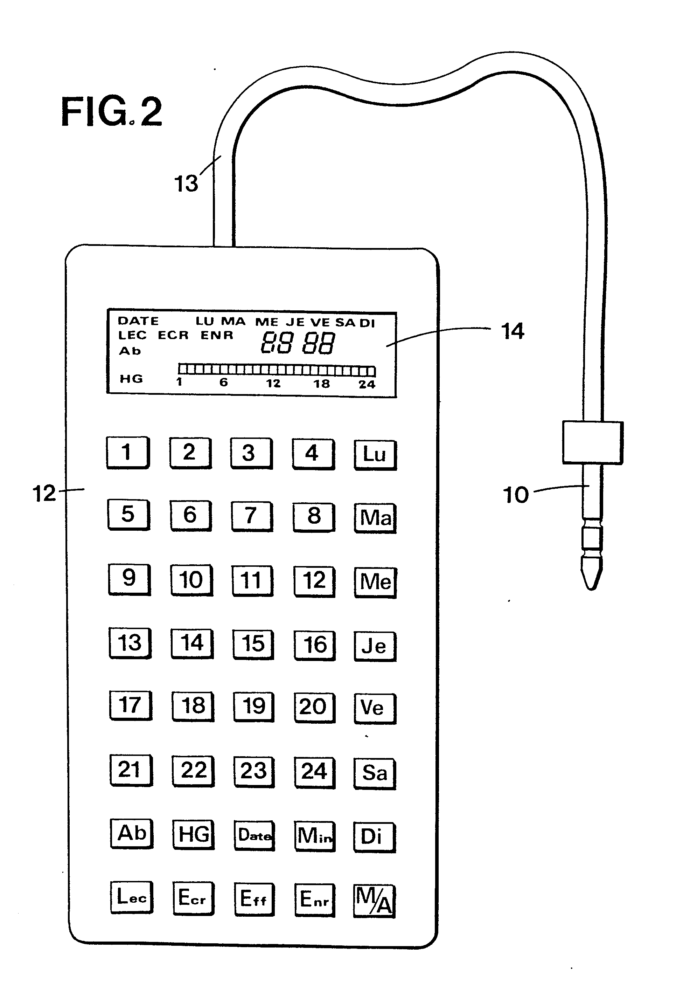

Le dispositif schématisé à la Figure 1 est constitué d'un appareil électrique de chauffage (1) alimenté par la source d'énergie électrique (2) et d'un organe de programmation (3). Les éléments constituant l'appareil de chauffage sont : un interrupteur (4) qui permet la mise sous et hors tension, un thermostat électronique (5), un organe de mesure de la température ambiante (6), un organe de réglage de la température de consigne (7), un émetteur de chaleur (8), un interface (9) qui permet le dialogue entre le thermostat (5) et l'organe de programmation (3) muni d'un connecteur (10) qui s'accouple à l'appareil de chauffage grâce à la partie complémentaire (11).

L'organe de programmation représenté à la figure 2 est constitué d'un boîtier (12) avantageusement dimensionné de telle façon qu'il puisse être facilement tenu en main et d'un cordon (13) dont l'extrémité est munie du connecteur (10). Le boîtier (12) comporte des touches de dialogue et de programmation, ainsi qu'un afficheur (14) de visualisation.

Les figures 3, 4, 5 sont un exemple de réalisation de l'interface (9). Il est constitué d'un boîtier (15) fixé sur l'appareil de chauffage de telle manière que l'interrupteur (16) et le connecteur (11) soient accessibles et que l'accumulateur (17) puisse être éventuellement changé. Le connecteur (11) est lui-même constitué de deux bornes (18) (19) et d'un interrupteur (20) qui est fermé lorsque le connecteur (10) de l'organe de programmation n'est pas branché et qui s'ouvre lorsque l'on connecte l'organe de programmation, la ligne électrique (21) y étant alors reliée. Cet interface (9) est relié au thermostat électronique (5) par le câble multiconducteurs (22).

Lorsque l'organe de programmation (3) n'est pas relié à l'appareil de chauffage (1), l'usager a le choix entre deux modes de fonctionnement dudit appareil. S'il agit sur l'interrupteur (16) de l'interface (9) de telle façon que le contact soit ouvert, le thermostat électronique (5) ne prend en compte que les informations données par l'organe de mesure de la température ambiante (6) et par l'organe de réglage de la température de consigne (7). Il obtient ainsi un fonctionnement normal de son appareil de chauffage, quels que soient le jour et l'heure.

Si l'usager agit sur l'interrupteur (16) de manière à fermer le contact, le thermostat électronique prend en compte le contenu de sa mémoire pour décider, suivant le jour et l'heure, s'il doit faire en sorte que la température ambiante donnée par l'organe de mesure (6) soit égale à la valeur prescrite par l'organe de réglage (7), s'il doit rechercher une température ambiante réduite de quelques degrés par rapport à la valeur de l'organe de réglage, s'il doit faire en sorte que la température ambiante ne descende pas en dessous d'un seuil communément appelé "hors-gel".

Le thermostat électronique (5) comporte donc, en plus de la mémoire, une horloge interne lui permettant de connaître le jour et l'heure de manière à suivre le programme enregistré par l'usager. En cas de panne d'alimentation, l'accumulateur (17) de l'interface (9) permet de sauvegarder le jour, l'heure et le programme. Il n'est donc pas nécessaire de reprogrammer le thermostat électronique si la source d'alimentation (2) fait défaut.

Lorsque l'usager veut faire une opération sur la mémoire du thermostat, il relie son organe de programmation (3) à l'interface (9) à l'aide des connecteurs (10) et (11). L'interrupteur (20) de l'interface (9) s'ouvre et l'appareil de chauffage passe en fonctionnement normal. Les lignes électriques (18), (19), (21) sont électriquement reliées à l'organe de programmation qui peut alors agir sur l'horloge interne du thermostat électronique (5) et sa mémoire suivant les actions de l'usager sur les touches du boîtier (12).

Les actions possibles de l'usager peuvent être :

Lecture et modification du jour et de l'heure de l'horloge interne du thermostat

Lecture, enregistrement ou effacement des programmes suivant les trois modes : fonctionnement normal, abaissement, hors-gel.

L'usager est guidé dans ses actions par l'afficheur (14) qui visualise les données et les fonctions sélectionnées. Lorsque l'usager déconnecte son organe de programmation, l'interrupteur (20) de l'interface se referme et le thermostat électronique (5) suit le mode de fonctionnement donné par l'état des contacts de l'interrupteur (16).

On comprend ainsi qu'un usager peut posséder de nombreux appareils de chauffage dans son local et n'avoir qu'un seul organe de programmation. La plus-value sur chaque appareil est faible puisque due à l'interface (9) de construction très simple et à la mémoire du thermostat électronique diffusée sur la même puce de circuit intégré que les circuits nécessaires à la régulation de température. Quant à l'organe de programmation, il peut être d'un prix modique, puisque de la dimension et de l'ordre de complexité d'une calculatrice de poche.

La description qui vient d'être faite du dispositif de programmation n'est bien entendu pas limitative et il est possible d'ajouter des fonctions supplémentaires sans sortir du cadre de l'invention.

Par exemple, il peut être intéressant, dans certains locaux recevant du public ou dans des bureaux, d'interdire les manipulations de l'organe de réglage de la température de consigne. Pour cela, l'organe de réglage (7) de l'appareil de chauffage (1) peut être supprimé, ainsi que l'interrupteur (16) de l'interface. Par contre, une fonction "Réglage de la température de consigne" pourra être ajoutée sur l'organe de programmation. Le responsable du chauffage de ces locaux pourra donc ajuster la température ambiante à sa plus juste valeur et éviter ainsi le gaspillage d'énergie.

L'application qui vient d'être décrite ici concerne essentiellement le chauffage des locaux par des appareils électriques, mais l'invention peut également s'appliquer à d'autres moyens de chauffage tels que le chauffage par eau chaude. Dans le cas de radiateurs ou convecteurs ou réseaux inclus dans le sol, il suffit d'équiper les diffuseurs de vannes motorisées électriquement et de l'ensemble thermostat électronique (5) et interface (9) décrits plus haut pour pouvoir programmer à l'aide du dispositif objet de l'invention le chauffage de ces locaux.

- 6 -

Revendications

1.        Dispositif de programmation du chauffage des locaux selon un mode de chauffage normal, un mode de chauffage réduit et un mode de maintien hors-gel, c a r a c t é r i s é en ce qu'il comprend des appareils de chauffage équipés de thermostats programmables individuellement, munis d'un interface et un organe mobile de programmation.

2.        Dispositif de programmation du chauffage des locaux conforme à la revendication 1, c a r a c t é r i s é en ce que le thermostat électronique de chaque appareil comporte une horloge interne lui permettant de connaître la date et l'heure.

3.        Dispositif de programmation du chauffage des locaux conforme aux revendications 1 et 2, c a r a c t é r i s é en ce que le thermostat électronique comporte une mémoire permettant de stocker le programme de chauffage.

4.        Dispositif conforme aux revendications 1 à 3, c a r a c t é r i - s é en ce que la liaison entre l'organe de programmation et le thermostat est réalisée par un interface comportant un accumulateur de sauvegarde de l'horloge interne et de la mémoire du thermostat électronique, ainsi qu'un interrupteur permettant le fonctionnement de l'appareil de chauffage suivant ou non le programme contenu dans la mémoire.

5.        Dispositif conforme à la revendication 1, c a r a c t é r i s é en ce que l'organe de programmation permet de lire et modifier l'horloge interne du thermostat.

6.        Dispositif conforme à la revendication 1, c a r a c t é r i s é en ce que l'organe de programmation permet de lire, enregistrer, effacer des programmes.

7.　　　Dispositif conforme à la revendication 1, c a r a c t é r i s é
en ce que les températures de consigne correspondant au mode de chauffage
normal, au mode de chauffage réduit, au mode de maintien hors-gel, sont
réglables à l'aide de l'organe de programmation.

0079087

FIG.1

FIG.3

FIG.4

FIG.5

# FIG.2

Office européen des brevets

**RAPPORT DE RECHERCHE EUROPEENNE**

**0079087**
Numéro de la demande

EP 82 20 1000

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl. ³) |
|---|---|---|---|
| | --- | | G 05 D 23/19 |
| A | REGELUNGSTECHNISCHE PRAXIS, vol. 22, no. 11, novembre 1980, pages 408-412, Munich (DE); K.F.FRÜH: "Ein dezentrales Prozessautomatisierungssystem mit Alternativen". *Page 410, colonne de gauche, lignes 1-18; figure 4* | 1 | G 05 D 23/20 G 05 B 15/02 |
| | --- | | |
| A | REGELUNGSTECHNISCHE PRAXIS, vol. 22, no. 4, avril 1980, pages 109-114, Munich (DE); H.WÖLFEL: MESUCORA '79: Neue digitale Prozessautomatisierungssysteme". *Page 110, colonne de gauche, lignes 9-18; figures 1,2* | 1 | |
| | --- | | |
| A | DE-A-2 819 032 (WALTHER-BÜROMASCHINEN) *Page 5, ligne 14 - page 8, ligne 16; figures* | 1-7 | DOMAINES TECHNIQUES RECHERCHES (Int. Cl. ³) |
| | --- | | G 05 B |
| A | DE-A-2 951 219 (LEVINE, R.MICHAEL, A.ARBOR) | 1 | G 05 D F 24 D |
| | ----- | | |

Le présent rapport de recherche a été établi pour toutes les revendications

| Lieu de la recherche | Date d'achèvement de la recherche | Examinateur |
|---|---|---|
| LA HAYE | 07-02-1983 | HOUILLON J.C.P.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82